# EUROPEAN PATENT APPLICATION

(11) **EP 4 534 366 A1**
(43) Date of publication of application: **09.04.2025**
(21) Application number: 23811900.2
(22) Date of filing: 26.05.2023
(51) Int. Cl.: B60S 1/56, B08B 3/02, B60S 1/52, B60S 1/60, B60S 1/62

(54) **CLEANING DEVICE**

(30) Priority: 27.05.2022 JP 2022086820; 07.09.2022 JP 2022142167
(71) Applicant: Koito Manufacturing Co., Ltd., Tokyo 141-0001 (JP)
(72) Inventor: MATSUNAGA, Takahiro, Shizuoka-shi, Shizuoka 424-8764 (JP); TERASAKI, Taisuke, Shizuoka-shi, Shizuoka 424-8764 (JP)
(74) Representative: Cabinet Beau de Loménie
(86) International application number: PCT/JP2023/019711
(87) International publication number: WO 2023/229028

(57) **Abstract**

A cleaning device (10) is adapted to be attached to a support (61) having an opening (612). A nozzle (11) is configured to jet cleaning liquid (W) toward a translucent cover (71) of a lighting device (70). A bracket holds the nozzle (11) in place. An adhesive portion adheres the bracket to an inner face of the support (61). The bracket includes a guide (132) and a cover (133). The guide (132) has a recessed face (132a) configured to guide the cleaning liquid (W) toward the translucent cover (71). The cover (133) at least partially covers the nozzle (11) as viewed from a side corresponding to an outer face (613) of the support (61). An outer edge (132b) of the guide (132) and an outer edge (133a) of the cover (133) are located inside an inner edge (612a) of the opening (612) when the cleaning device (10) is attached to the support (61).

## Description

### Field

The present disclosure relates to a cleaning device adapted to be attached to a support having an opening or a recessed face.

### Background

Patent Document 1 discloses a cleaning device adapted to be attached to a support provided as a part of a vehicle that is an example of a mobility. The cleaning device includes a nozzle for jetting cleaning liquid, that is an example of fluid, to clean a headlamp. While the cleaning liquid is not jetted, the nozzle is obscured by a part of the support. When the cleaning liquid is jetted, the part of the support is displaced to expose the nozzle.

### Citation List

### Patent Document

Patent Document 1: Japanese Patent Publication No. 2019-156210 A

### Summary of the Invention

### Technical Problem

It is demanded to reduce the visibility of such a cleaning device.

### Solution to Problem

A first illustrative aspect of the presently disclosed subject matter provides a cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the bracket includes:
   a guide having a recessed face that is configured to guide the fluid toward the target; and
   a cover at least partially covering the nozzle as viewed from a side corresponding to an outer face of the support; and
wherein an outer edge of the guide and an outer edge of the cover are configured to be located inside an inner edge of the opening when the cleaning device is attached to the support.

According to the configuration of the first illustrative aspect, since the outer edge of the guide of the bracket and the outer edge of the cover are located inside the inner edge of the opening, the bracket and the inner face are adhered by the adhesive portion with a simple operation of causing the guide and the cover to pass through the opening from a side corresponding to the inner face of the support, so that the cleaning device can be attached to the support. Since it is possible to eliminate the need for work from a side corresponding to the outer face of the support, it is possible to simplify the production equipment and improve the productivity.

In addition, it is possible to reduce the dimension of a portion of the bracket that is exposed through the opening on the side corresponding to the outer face of the support. Coupled with the appearance that at least a portion of the nozzle is covered by the cover when viewed from the side corresponding to the outer face, the visibility of the cleaning device can be reduced.

A second illustrative aspect of the presently disclosed subject matter provides a cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the bracket includes a guide having a recessed face that is configured to guide the fluid toward the target;
wherein the nozzle is disposed so as to be at least partially covered by the support when the cleaning device is attached to the support; and
wherein an outer edge of the guide is configured to be located inside an inner edge of the opening when the cleaning device is attached to the support.

According to the configuration of the second illustrative aspect, since the outer edge of the guide of the bracket is located inside the inner edge of the opening, the bracket and the inner face are adhered by the adhesive portion with a simple operation of causing the opening to pass through the guide from a side corresponding to the inner face of the support, so that the cleaning device can be attached to the support. Since it is possible to eliminate the need for work from a side corresponding to the outer face of the support, it is possible to simplify the production equipment and improve the productivity.

In addition, since at least a portion of the nozzle is covered by the support itself when viewed from the side corresponding to the outer face of the support, it is possible to reduce the dimension of the portion exposed to the side corresponding to the outer face through the opening in the bracket. Accordingly, it is possible to reduce the visibility of the cleaning device.

A third illustrative aspect of the presently disclosed subject matter provides a cleaning device adapted to be attached to a support having a recessed face, the cleaning device comprising:
a nozzle configured to jet fluid toward a target;
a bracket holding the nozzle in place; and
an adhesive portion adhering the bracket to an inner face of the support,
wherein the bracket includes an opening configured to receive the recessed face at a side corresponding to the inner face of the support;
wherein the nozzle is disposed such that the fluid is guided toward the target by the recessed face when the cleaning device is attached to the support; and
wherein the nozzle is disposed so as to be at least partially covered by the support as viewed from a side corresponding to an outer face of the support when the cleaning device is attached to the support.

According to the configuration of the third illustrative aspect, since the bracket has the opening for receiving the recessed face of the support on the side corresponding to the inner face of the support, the bracket and the inner face are adhered by the adhesive portion with a simple operation of causing the opening to receive the recessed face from the side corresponding to the inner face of the support, so that the cleaning device can be attached to the support. Since it is possible to eliminate the need for work from a side corresponding to the outer face of the support, it is possible to simplify the production equipment and improve the productivity.

In addition, it is possible to make difficult to view the bracket from the side corresponding to the outer face of the support. Coupled with the appearance that at least a portion of the nozzle is covered by the support itself when viewed from the side corresponding to the outer face of the support, the visibility of the cleaning device can be reduced.

A fourth illustrative aspect of the presently disclosed subject matter provides a cleaning device adapted to be attached to a support having a recessed face, the cleaning device comprising:
a nozzle configured to jet fluid toward a target; and
an engaging portion configured to engage with the support at a side corresponding to an inner face of the support to hold the nozzle in place,
wherein the nozzle is disposed such that the fluid is guided toward the target by the recessed face when the cleaning device is attached to the support; and
wherein the nozzle is disposed so as to be at least partially covered by the support as viewed from a side corresponding to an outer face of the support when the cleaning device is attached to the support.

According to the configuration of the fourth illustrative aspect, the cleaning device can be attached to the support with a simple operation of engaging the nozzle with the support from a side corresponding to the inner face of the support with the use of the engaging portion. Since it is possible to eliminate the need for work from a side corresponding to the outer face of the support, it is possible to simplify the production equipment and improve the productivity.

In addition, since it is possible to make it difficult to view the nozzle from the side corresponding to the outer face of the support, the visibility of the cleaning device can be reduced.

A fifth illustrative aspect of the presently disclosed subject matter provides a cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the nozzle is disposed such that the fluid that has passed the opening is jetted toward the target when the cleaning device is attached to the support; and
wherein the nozzle is disposed so as to be at least partially covered by the support as viewed from a side corresponding to an outer face of the support when the cleaning device is attached to the support.

According to the configuration of the fifth illustrative aspect, the bracket and the inner face are adhered by the adhesive portion with a simple operation of pressing the bracket against the support from a side corresponding to the inner face of the support, so that the cleaning device can be attached to the support. Since it is possible to eliminate the need for work from a side corresponding to the outer face of the support, it is possible to simplify the production equipment and improve the productivity.

In addition, since the target and the nozzle can be directly faced each other through the opening of the support, the flexibility as for the locational relationship therebetween can be increased.

In addition, it is possible to make difficult to view the bracket from the side corresponding to the outer face of the support. Coupled with the appearance that at least a portion of the nozzle is covered by the support itself when viewed from the side corresponding to the outer face of the support, the visibility of the cleaning device can be reduced.

### Brief Description of Drawings

FIG. 1 illustrates an appearance of a cleaning device according to a first embodiment.
FIG. 2 illustrates a state that the cleaning device of FIG. 1 is attached to a support.
FIG. 3 illustrates a vehicle in which the cleaning device of FIG. 1 is to be installed.
FIG. 4 illustrates a cross section viewed from an arrowed direction along a line IV-IV of FIG. 2.
FIG. 5 illustrates a cleaning device according to a comparative example.
FIG. 6 illustrates an appearance of a cleaning device according to a second embodiment.
FIG. 7 illustrates a state that the cleaning device of FIG. 6 is attached to a support.
FIG. 8 illustrates a cross section viewed from an arrowed direction along a line VIII-VIII of FIG. 7.
FIG. 9 illustrates an appearance of a cleaning device according to a third embodiment.
FIG. 10 illustrates a state that the cleaning device of FIG. 9 is attached to a support.
FIG. 11 illustrates a cross section viewed from an arrowed direction along a line XI-XI of FIG. 10.
FIG. 12 illustrates an appearance of a cleaning device according to a fourth embodiment.
FIG. 13 illustrates a state that the cleaning device of FIG. 12 is attached to a support.
FIG. 14 illustrates a cross section viewed from an arrowed direction along a line XIV-XIV of FIG. 13.
FIG. 15 illustrates an appearance of a cleaning device according to a fifth embodiment.
FIG. 16 illustrates a state that the cleaning device of FIG. 15 is attached to a support.
FIG. 17 illustrates a cross section viewed from an arrowed direction along a line XVII-XVII of FIG. 16.
FIG. 18 illustrates an appearance of a cleaning device according to a sixth embodiment.
FIG. 19 illustrates a state that the cleaning device of FIG. 18 is attached to a support.
FIG. 20 illustrates a cross section viewed from an arrowed direction along a line XX-XX of FIG. 19.
FIG. 21 illustrates an appearance of the cleaning device as viewed from a direction along an arrow XXI of FIG. 20.

### Description of Embodiments

Exemplary embodiments will be described below in detail with reference to the accompanying drawings. In each of the drawings used in the following descriptions, the scale is changed as required in order to make each member have a recognizable size.

In the accompanying drawings, an arrow F represents a forward direction of the illustrated structure. An arrow B represents a rearward direction of the illustrated structure. An arrow U represents an upward direction of the illustrated structure. An arrow D represents a downward direction of the illustrated structure. An arrow R represents a rightward direction of the illustrated structure. An arrow L represents a leftward direction of the illustrated structure. The expression according to these directions is intended to be used for convenience of explanation and is not intended to limit the attitude of the structure at the time of actual use.

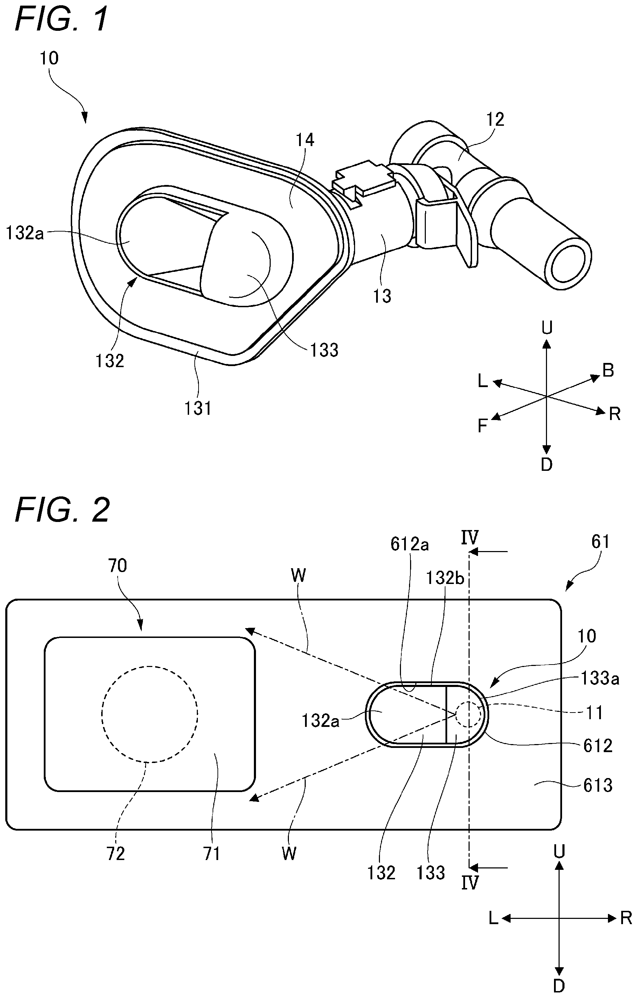

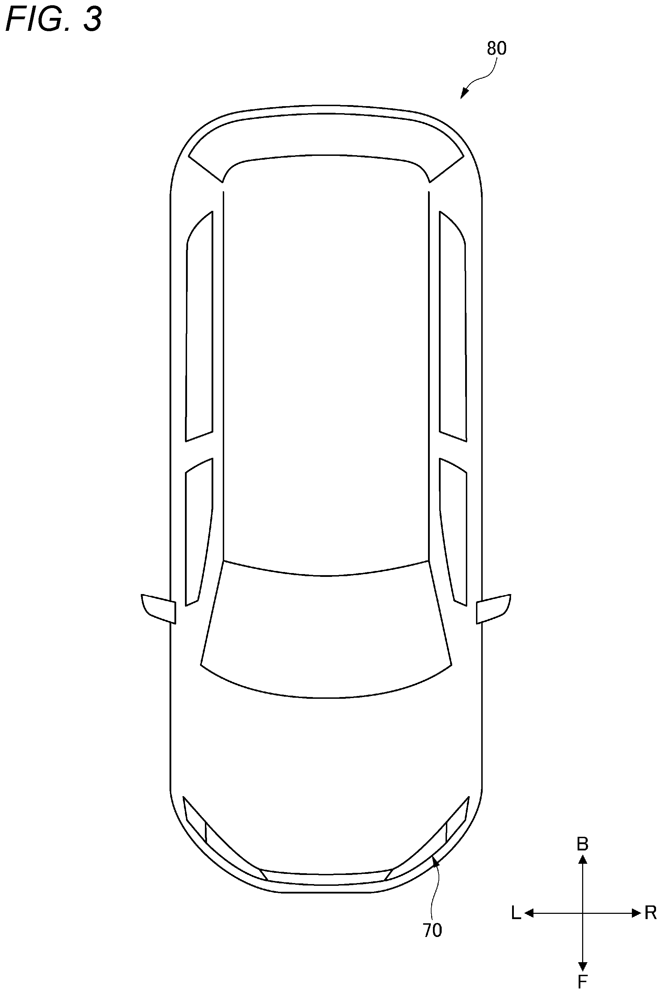

FIG. 1 illustrates an appearance of a cleaning device 10 according to a first embodiment. As illustrated in FIG. 2, the cleaning device 10 is a device adapted to be attached to a support 61 to clean a lighting device 70. For example, the lighting device 70 may be a headlamp device adapted to be installed in a vehicle 80 illustrated in FIG. 3. The support 61 may be a component constituting a part of the vehicle 80. The vehicle 80 is an example of a mobility.

As illustrated in FIG. 2, the lighting device 70 includes a translucent cover 71. The translucent cover 71 defines a lamp chamber accommodating a light source 72, and allows passage of light emitted from the light source 72. The cleaning device 10 includes a nozzle 11. The cleaning device 10 is configured to perform cleaning by jetting cleaning liquid W from the nozzle 11 toward the translucent cover 71. The translucent cover 71 is an example of a target. The cleaning liquid W is an example of fluid.

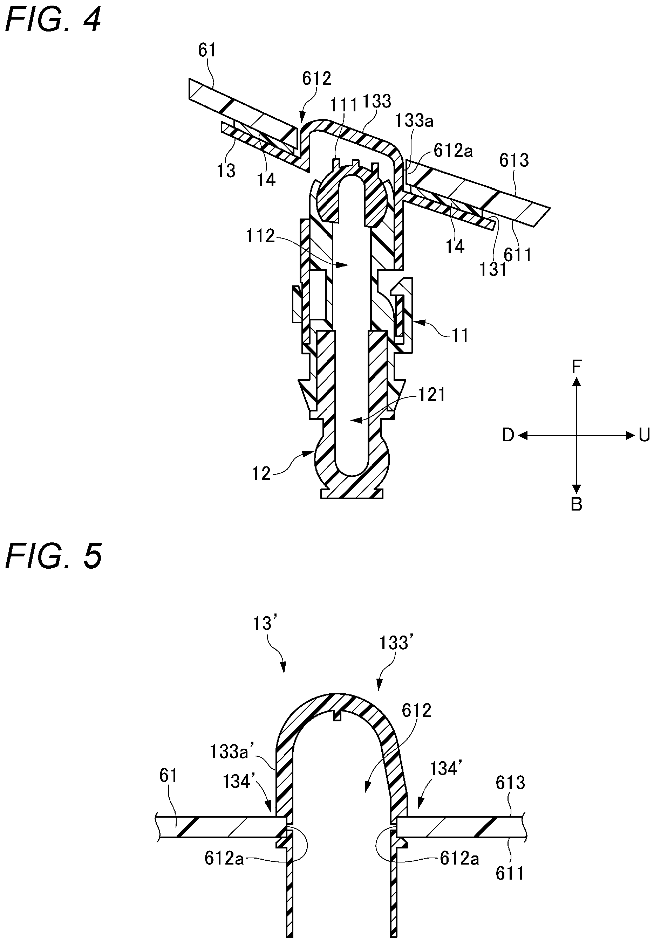

FIG. 4 illustrates a cross section along the line IV-IV in FIG. 2 and viewed from the arrowed direction. The cleaning device 10 includes a joint 12. One end of a supply pipe (not illustrated) of the cleaning liquid W is connected to the joint 12. The joint 12 includes a channel 121 adapted to be communicated with the supply pipe.

On the other hand, the nozzle 11 includes an outlet 111 and a channel 112. The channel 112 communicates with the outlet 111. As the nozzle 11 is connected to the joint 12, the channel 112 and the channel 121 communicate with each other. As a result, a channel for the cleaning liquid W extending from the supply pipe to the outlet 111 is formed. The cleaning liquid W is jetted from the outlet 111.

The cleaning device 10 includes a bracket 13. The bracket 13 is configured to hold the nozzle 11 in place. In other words, the position of the nozzle 11 in the cleaning device 10 is unchanged and is distinguished from a cleaning device with a so-called pop-up nozzle.

As illustrated in FIG. 1, the cleaning device 10 includes an adhesive portion 14. As illustrated in FIG. 4, the adhesive portion 14 adheres the bracket 13 to an inner face 611 of the support 61. In other words, the cleaning device 10 is attached to the support 61 from the side corresponding to the inner face 611.

In this example, the adhesive portion 14 is implemented by a tape member having an adhesive layer on both faces thereof. One adhesive layer in the tape member is adhered to a supported face 131 of the bracket 13. The other adhesive layer is adhered to the inner face 611 of the support 61.

It should be noted that the adhesive portion 14 may be implemented by adhesive agent applied when the cleaning device 10 is attached to the support 61.

As illustrated in FIG. 1, the bracket 13 includes a guide 132 and a cover 133. On the other hand, as illustrated in FIGS. 2 and 4, an opening 612 is formed in the support 61. As the cleaning device 10 is attached to the support 61, the guide 132 and the cover 133 are exposed on the side corresponding to an outer face 613 of the support 61 through the opening 612.

As illustrated in FIGS. 1 and 2, the guide 132 has a recessed face 132a. The recessed face 132a has a dimension and a shape capable of guiding the cleaning liquid W jetted from the nozzle 11 to the translucent cover 71.

The cover 133 is formed so as to cover at least a portion of the nozzle 11 when viewed from a side corresponding to the outer face 613 of the support 61.

As illustrated in FIGS. 2 and 4, an outer edge 132b of the guide 132 and the outer edge 133a of the cover 133 are located inside an inner edge 612a of the opening 612.

FIG. 5 illustrates a bracket of a cleaning device according to a comparative example. The bracket includes a cover 133'. Although not illustrated, the cover 133' is disposed so as to cover a nozzle located below.

The cover 133' includes an engaging portion 134'. The engaging portion 134' secures the bracket to the support 61 by engaging the inner edge 612a of the opening 612 of the support 61 so as to clamp from the thickness direction of the support 61. According to such a configuration, an outer edge 133a' of the cover 133' must be located outside the inner edge 612a of the opening 612. Since the dimension of the portion exposed on the side corresponding to the outer face 613 of the support 61 is increased by the corresponding amount, the visibility of the cleaning device is enhanced.

In addition, because of the structure thereof, the cover 133' must be inserted through the opening 612 from the side corresponding to the outer face 613. Accordingly, in order to couple the bracket 13' to the nozzle, it is necessary to perform work from both the side corresponding to the inner face 611 and the side corresponding to the outer face 613 of the support 61.

On the other hand, in the configuration according to the present embodiment, since the outer edge 132b of the guide 132 of the bracket 13 and the outer edge 133a of the cover 133 are located inside the inner edge 612a of the opening 612, the bracket 13 and the inner face 611 are adhered by the adhesive portion 14 with a simple operation of causing the guide 132 and the cover 133 to pass through the opening 612 from the side corresponding to the inner face 611 of the support 61, so that the cleaning device 10 can be attached to the support 61. Since it is possible to eliminate the need for work from the side corresponding to the outer face 613 of the support 61, it is possible to simplify the production equipment and improve the productivity.

In addition, it is possible to reduce the dimension of a portion of the bracket 13 exposed on the side corresponding to the outer face 613 of the support 61 through the opening 612. Coupled with the appearance that at least a portion of the nozzle 11 is covered by the cover 133 when viewed from the side corresponding to the outer face 613, the visibility of the cleaning device 10 can be reduced.

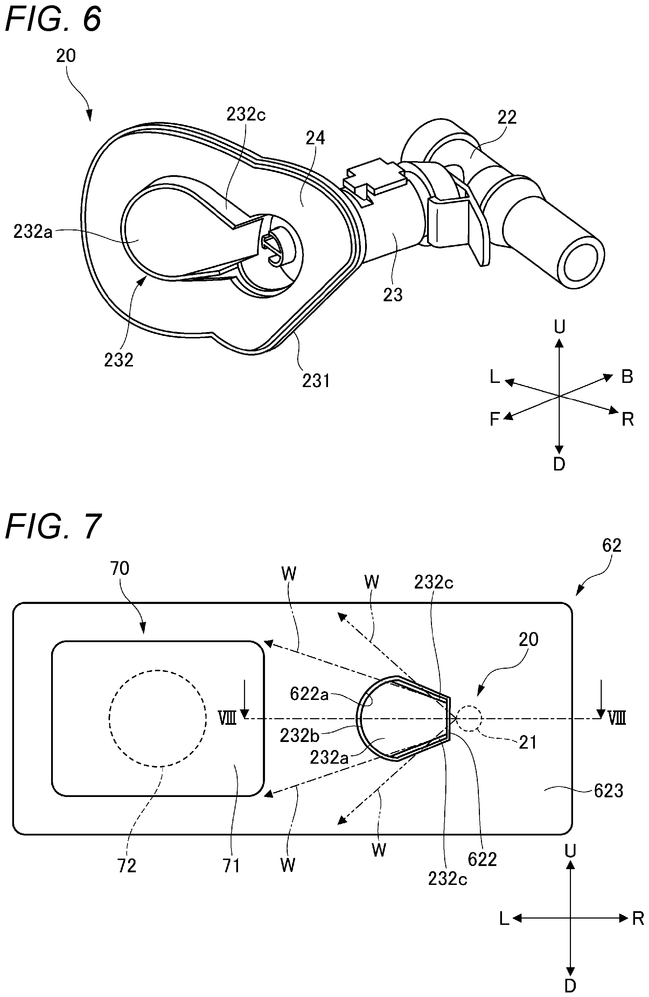

FIG. 6 illustrates an appearance of a cleaning device 20 according to a second embodiment. As illustrated in FIG. 7, the cleaning device 20 is a device adapted to be attached to a support 62 to clean a lighting device 70. The support 62 may be a component constituting a part of the vehicle 80 illustrated in FIG. 3.

As illustrated in FIG. 7, the cleaning device 20 includes a nozzle 21. The cleaning device 20 is configured to perform cleaning by jetting cleaning liquid W from the nozzle 21 toward the translucent cover 71.

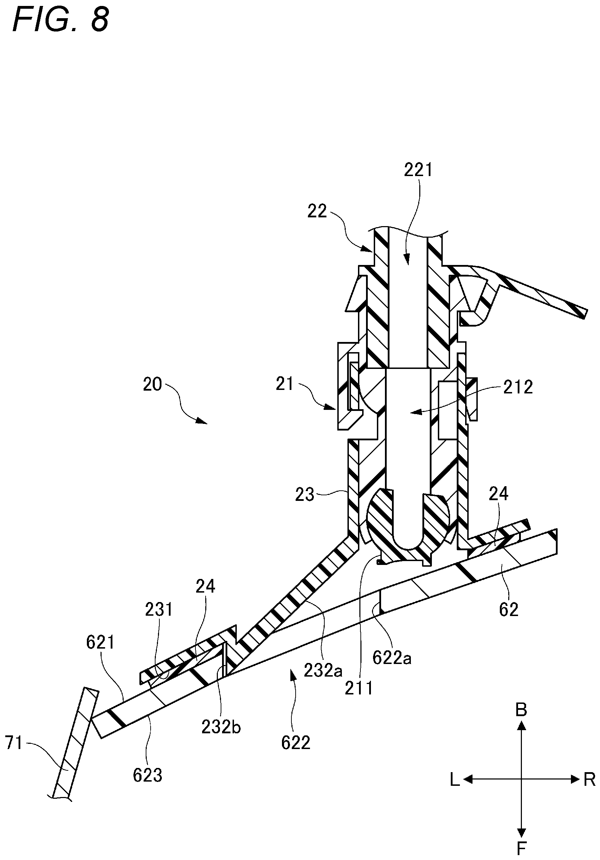

FIG. 8 illustrates a cross section along the line VIII-VIII in FIG. 6 as viewed from the arrowed direction. The cleaning device 20 includes a joint 22. One end of a supply pipe (not illustrated) of the cleaning liquid W is connected to the joint 22. The joint 22 includes a channel 221 adapted to be communicated with the supply pipe.

On the other hand, the nozzle 21 includes an outlet 211 and a channel 212. The channel 212 communicates with the outlet 211. As the nozzle 21 is connected to the joint 22, the channel 212 and the channel 221 communicate with each other. As a result, a channel for the cleaning liquid W extending from the supply pipe to the outlet 211 is formed. The cleaning liquid W is jetted from the outlet 211.

The cleaning device 20 includes a bracket 23. The bracket 23 is configured to hold the nozzle 21 in place. In other words, the position of the nozzle 21 in the cleaning device 20 is unchanged, and is distinguished from a cleaning device with a so-called pop-up nozzle.

As illustrated in FIG. 6, the cleaning device 20 includes an adhesive portion 24. As illustrated in FIG. 8, the adhesive portion 24 adheres the bracket 23 to an inner face 621 of the support 62. In other words, the cleaning device 20 is attached to the support 62 from the side corresponding to the inner face 621.

In this example, the adhesive portion 24 is implemented by a tape member having an adhesive layer on both faces thereof. One adhesive layer in the tape member is adhered to a supported face 231 of the bracket 23. The other adhesive layer is adhered to the inner face 621 of the support 62.

It should be noted that the adhesive portion 24 may be implemented by adhesive agent applied when the cleaning device 20 is attached to the support 62.

As illustrated in FIG. 6, the bracket 23 includes a guide 232. The guide 232 has a recessed face 232a. The recessed face 232a has a dimension and a shape capable of guiding the cleaning liquid W jetted from the nozzle 21 to the translucent cover 71.

On the other hand, as illustrated in FIGS. 7 and 8, an opening 622 is formed in the support 62. As the cleaning device 20 is attached to the support 62, the guide 232 is exposed to the side corresponding to an outer face 623 of the support 62 through the opening 622.

At the same time, an outer edge 232b of the guide 232 is located inside an inner edge 622a of the opening 622. The nozzle 21 is disposed such that at least a portion thereof is covered by the support 62 when viewed from a side corresponding to the outer face 623 of the support 62.

In the configuration according to the present embodiment, since the outer edge 232b of the guide 232 of the bracket 23 is located inside the inner edge 622a of the opening 622, the bracket 23 and the inner face 621 are adhered by the adhesive portion 24 with a simple operation of causing the opening 622 to pass through from the side corresponding to the inner face 621 of the support 62, so that the cleaning device 20 can be attached to the support 62. Since it is possible to eliminate the need for work from the side corresponding to the outer face 623 of the support 62, it is possible to simplify the production equipment and improve the productivity.

In addition, since at least a portion of the nozzle 21 is covered by the support 62 itself when viewed from the side corresponding to the outer face 623 of the support 62, it is possible to reduce the dimension of the portion exposed on the side corresponding to the outer face 623 through the opening 622 in the bracket 23. Accordingly, it is possible to reduce the visibility of the cleaning device 20.

As illustrated in FIGS. 6 and 7, the guide 232 may include a deflector 232c. The deflector 232c is formed as a wall capable of deflecting the traveling direction of the cleaning liquid W jetted from the nozzle 21 toward the translucent cover 71.

An arrow indicated with a chain line in FIG. 7 represents a path of the cleaning liquid W assumed when the deflector 232c is not present. It is conceivable that the cleaning liquid W that is not deflected by the deflector 232c is consumed without contributing to the cleaning of the translucent cover 71. By providing the deflector 232c as in this example, it is possible to improve the utilization efficiency of the cleaning liquid W.

A similar deflector may be formed on the guide 132 of the bracket 13 of the cleaning device 10 according to the first embodiment.

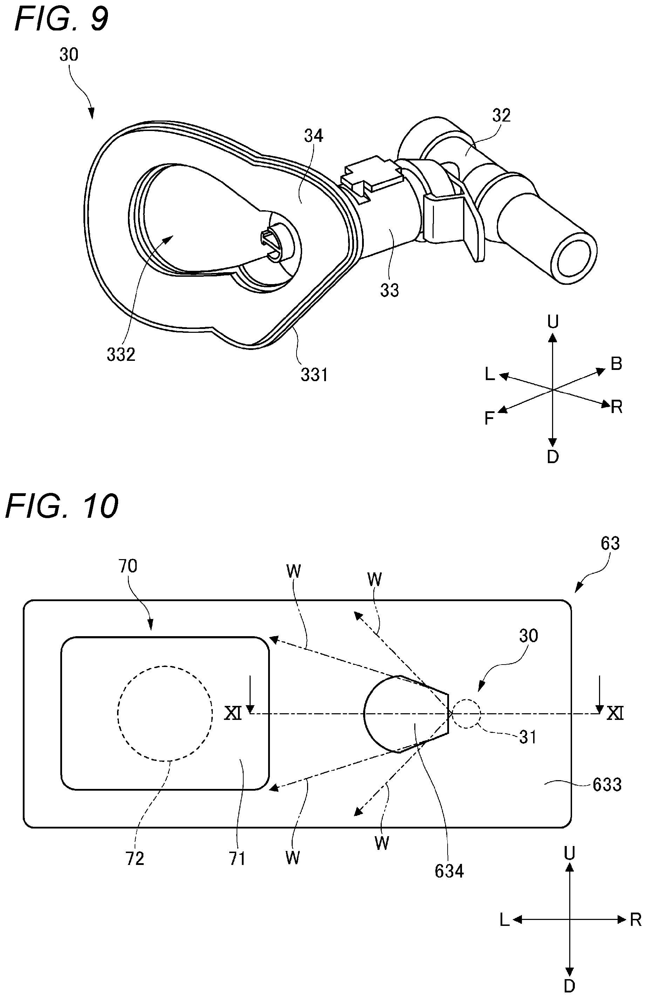

FIG. 9 illustrates an appearance of a cleaning device 30 according to a third embodiment. As illustrated in FIG. 10, the cleaning device 30 is a device adapted to be attached to a support 63 to clean the lighting device 70. The support 63 may be a component constituting a part of the vehicle 80 illustrated in FIG. 3.

As illustrated in FIG. 10, the cleaning device 30 includes a nozzle 31. The cleaning device 30 is configured to perform cleaning by jetting cleaning liquid W from the nozzle 31 toward the translucent cover 71.

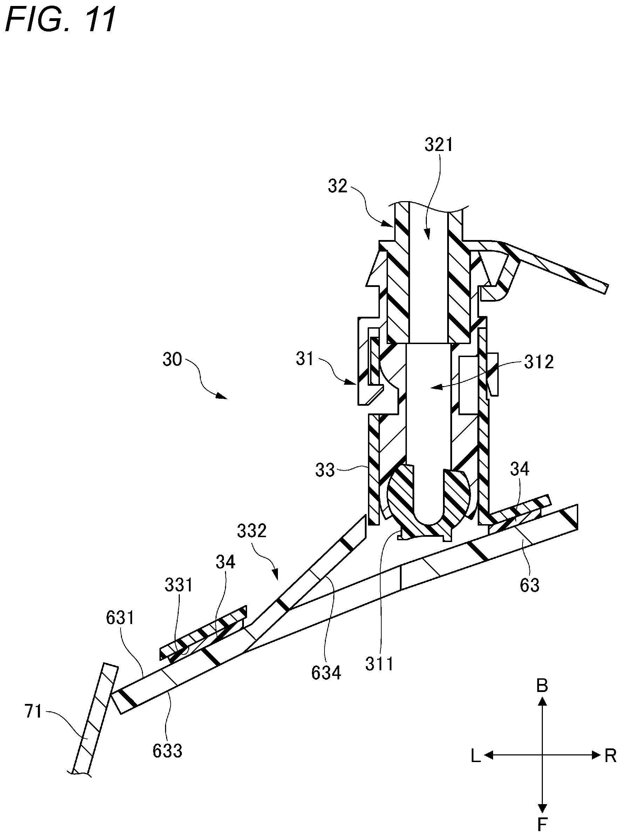

FIG. 11 illustrates a cross section along the line XI-XI in FIG. 10 and viewed from the arrowed direction. The cleaning device 30 includes a joint 32. One end of a supply pipe (not illustrated) of the cleaning liquid W is connected to the joint 32. The joint 32 includes a channel 321 adapted to be communicated with the supply pipe.

On the other hand, the nozzle 31 includes an outlet 311 and a channel 312. The channel 312 communicates with the outlet 311. As the nozzle 31 is connected to the joint 32, the channel 312 and the channel 321 communicate with each other. As a result, a channel for the cleaning liquid W extending from the supply pipe to the outlet 311 is formed. The cleaning liquid W is jetted from the outlet 311.

The cleaning device 30 includes a bracket 33. The bracket 33 is configured to hold the nozzle 31 in place. In other words, the position of the nozzle 31 in the cleaning device 30 is unchanged, and is distinguished from a cleaning device with a so-called pop-up nozzle.

As illustrated in FIG. 9, the cleaning device 30 includes an adhesive portion 34. As illustrated in FIG. 11, the adhesive portion 34 adheres the bracket 33 to an inner face 631 of the support 63. In other words, the cleaning device 30 is attached to the support 63 from the side corresponding to the inner face 631.

In this example, the adhesive portion 34 is implemented by a tape member having an adhesive layer on both faces thereof. One adhesive layer in the tape member is adhered to a supported face 331 of the bracket 33. The other adhesive layer is adhered to the inner face 631 of the support 63.

It should be noted that the adhesive portion 34 may be implemented by adhesive agent applied when the cleaning device 30 is attached to the support 63.

As illustrated in FIGS. 10 and 11, the support 63 has a recessed face 634. The recessed face 634 is formed as a face continuous with an outer face 633 of the support 63 and recessed to the side corresponding to the inner face 631 relative to the outer face 633.

On the other hand, as illustrated in FIG. 9, the bracket 33 of the cleaning device 30 has an opening 332. As illustrated in FIG. 11, the opening 332 has a shape and a dimension capable of receiving the recessed face 634 when the cleaning device 30 is attached to the support 63.

At the same time, the nozzle 31 is disposed so that at least a portion thereof is covered by the support 63 when viewed from the side corresponding to the outer face 633 of the support 63. The arrangement of the nozzle 31 is determined so that the jetted cleaning liquid W can be guided to the translucent cover 71 of the lighting device 70 by the recessed face 634 of the support 63.

In the configuration according to the present embodiment, since the bracket 33 has the opening 332 for receiving the recessed face 634 of the support 63 on the side corresponding to the inner face 631 of the support 63, the bracket 33 and the inner face 631 are adhered by the adhesive portion 34 with a simple operation of causing the opening 332 to receive the recessed face 634 from the side corresponding to the inner face 631 of the support 63, so that the cleaning device 30 can be attached to the support 63. Since it is possible to eliminate the need for work from the side corresponding to the outer face 633 of the support 63, it is possible to simplify the production equipment and improve the productivity.

In addition, it is possible to make difficult to view the bracket 43 from the side corresponding to the outer face 633 of the support 63. Coupled with the appearance that at least a portion of the nozzle 31 is covered by the support 63 itself when viewed from the side corresponding to the outer face 633 of the support 63, the visibility of the cleaning device 30 can be reduced.

The arrangement of the nozzle 31 may be determined so that the jetted cleaning liquid W is deflected toward the translucent cover 71 by a part of the recessed face 634. An arrow indicated with a chain line in FIG. 10 represents a path of the cleaning liquid W assumed when the cleaning liquid W is not subjected to the deflection by the recessed face 634. It is conceivable that the cleaning liquid W that is not deflected by the recessed face 634 is consumed without contributing to the cleaning of the translucent cover 71. By determining the arrangement of the nozzle 31 as described above, it is possible to improve the utilization efficiency of the cleaning liquid W.

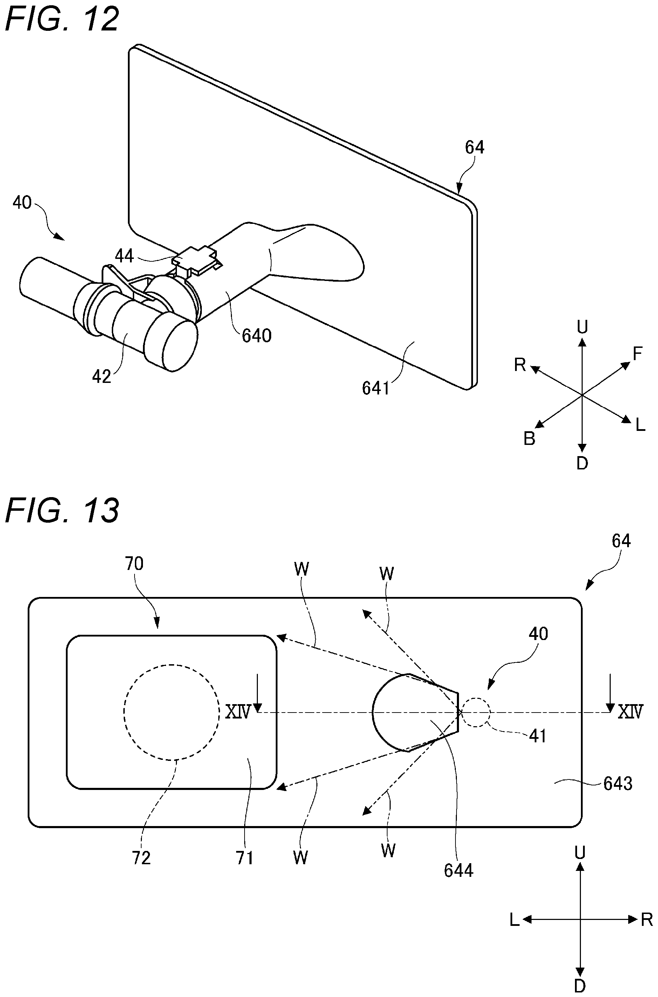

FIG. 12 illustrates an appearance of a cleaning device 40 according to a fourth embodiment. As illustrated in FIG. 13, the cleaning device 40 is a device adapted to be attached to a support 64 to clean the lighting device 70. The support 64 may be a component constituting a part of the vehicle 80 illustrated in FIG. 3.

As illustrated in FIG. 13, the cleaning device 40 includes a nozzle 41. The cleaning device 40 is configured to perform cleaning by jetting cleaning liquid W from the nozzle 41 toward the translucent cover 71.

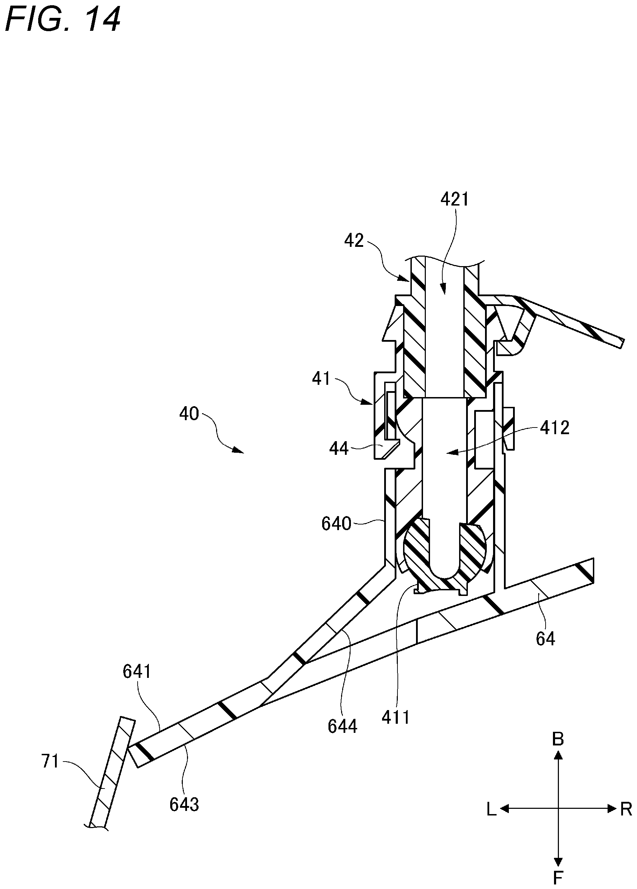

FIG. 14 illustrates a cross section along the line XIV-XIV in FIG. 13 and viewed from the arrowed direction. The cleaning device 40 includes a joint 42. One end of a supply pipe (not illustrated) of the cleaning liquid W is connected to the joint 42. The joint 42 includes a channel 421 adapted to be communicated with the supply pipe.

On the other hand, the nozzle 41 includes an outlet 411 and a channel 412. The channel 412 communicates with the outlet 411. As the nozzle 41 is connected to the joint 42, the channel 412 and the channel 421 communicate with each other. As a result, a channel for the cleaning liquid W extending from the supply pipe to the outlet 411 is formed. The cleaning liquid W is jetted from the outlet 411.

As illustrated in FIGS. 12 and 14, the support 64 includes a bracket portion 640. The bracket portion 640 extends from an inner face 641 of the support 64 so as to have a hollowed cylindrical shape.

On the other hand, the cleaning device 40 includes an engaging portion 44. The engaging portion 44 is configured to engage with the bracket portion 640 to hold the nozzle 41 in place relative to the bracket portion 640. The engaging portion 44 may be implemented by a well-known snap-fit structure or the like.

In other words, the cleaning device 40 is attached to the support 64 from the side corresponding to the inner face 641. The position of the nozzle 41 in the cleaning device 40 is unchanged and is distinguished from a cleaning device with a so-called pop-up nozzle.

As illustrated in FIGS. 13 and 14, the support 64 has a recessed face 644. The recessed face 644 is formed as a face continuous with the outer face 643 of the support 64 and recessed to the side corresponding to the inner face 641 relative to the outer face 643. On the other hand, the recessed face 644 communicates with an inner circumferential face of the bracket portion 640.

As the cleaning device 40 is attached to the support 64, the nozzle 41 is disposed such that at least a portion thereof is covered by the support 64 when viewed from a side corresponding to the outer face 643 of the support 64. The arrangement of the nozzle 41 is determined so that the jetted cleaning liquid W can be guided to the translucent cover 71 of the lighting device 70 by the recessed face 644 of the support 64.

In the configuration according to the present embodiment, the cleaning device 40 can be attached to the support 64 with a simple operation of engaging the nozzle 41 with the support 64 from the side corresponding to the inner face 641 of the support 64 with the use of the engaging portion 44. Since it is possible to eliminate the need for work from the side corresponding to the outer face 643 of the support 64, it is possible to simplify the production equipment and improve the productivity.

In addition, since it is possible to make it difficult to view the nozzle 41 from the side corresponding to the outer face 643 of the support 64, the visibility of the cleaning device 40 can be reduced.

The arrangement of the nozzle 41 may be determined so that the jetted cleaning liquid W is deflected toward the translucent cover 71 by a part of the recessed face 644. An arrow indicated with a chain line in FIG. 13 represents a path of the cleaning liquid W assumed when the cleaning liquid W is not subjected to the deflection by the recessed face 644. It is conceivable that the cleaning liquid W that is not deflected by the recessed face 644 is consumed without contributing to the cleaning of the translucent cover 71. By determining the arrangement of the nozzle 41 as described above, it is possible to improve the utilization efficiency of the cleaning liquid W.

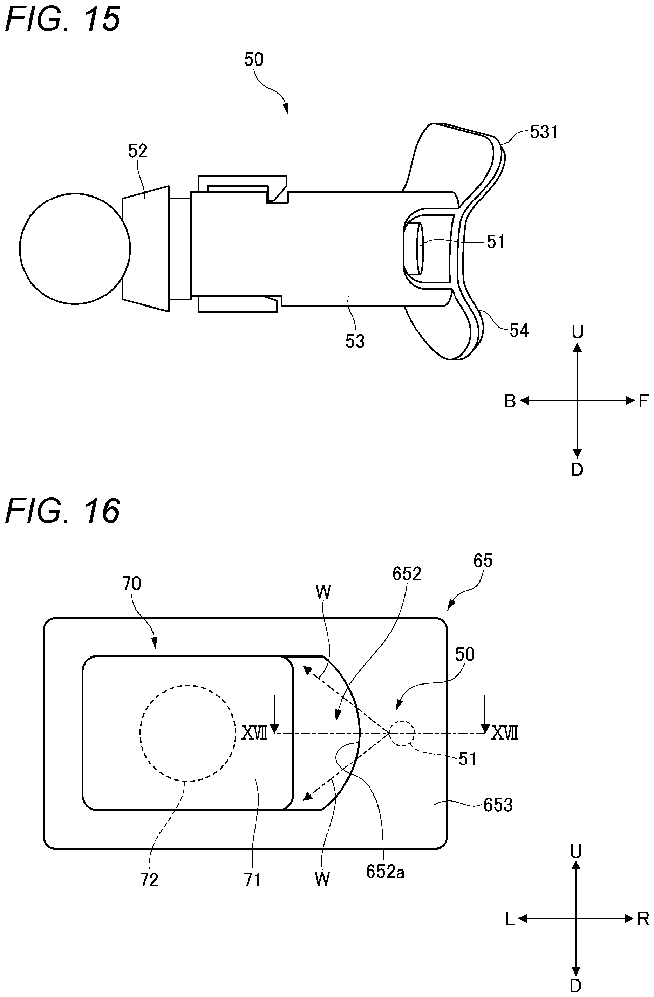

FIG. 15 illustrates an appearance of a cleaning device 50 according to a fifth embodiment. As illustrated in FIG. 16, the cleaning device 50 is a device adapted to be attached to a support 65 to clean the lighting device 70. The support 65 may be a component constituting a part of the vehicle 80 illustrated in FIG. 3.

As illustrated in FIG. 16, the cleaning device 50 includes a nozzle 51. The cleaning device 50 is configured to perform cleaning by jetting cleaning liquid W from the nozzle 51 toward the translucent cover 71.

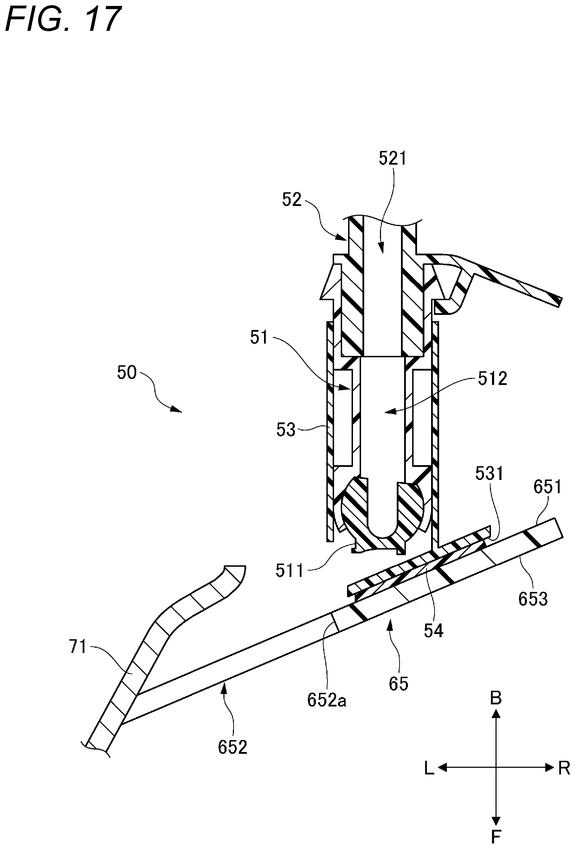

FIG. 17 illustrates a cross section along the line XVII-XVII in FIG. 16 and viewed from the arrowed direction. The cleaning device 50 includes a joint 52. One end of a supply pipe (not illustrated) of the cleaning liquid W is connected to the joint 52. The joint 52 includes a channel 521 adapted to be communicated with the supply pipe.

On the other hand, the nozzle 51 includes an outlet 511 and a channel 512. The channel 512 communicates with the outlet 511. As the nozzle 51 is connected to the joint 52, the channel 512 and the channel 521 communicate with each other. As a result, a channel for the cleaning liquid W extending from the supply pipe to the outlet 511 is formed. The cleaning liquid W is jetted from the outlet 511.

The cleaning device 50 includes a bracket 53. The bracket 53 is configured to hold the nozzle 51 in place. In other words, the position of the nozzle 51 in the cleaning device 50 is unchanged, and is distinguished from a cleaning device with a so-called pop-up nozzle.

The cleaning device 50 includes an adhesive portion 54. The adhesive portion 54 adheres the bracket 53 to an inner face 651 of the support 65. In other words, the cleaning device 50 is attached to the support 65 from the side corresponding to the inner face 651.

In this example, the adhesive portion 54 is implemented by a tape member having an adhesive layer on both faces thereof. One adhesive layer in the tape member is adhered to a supported face 531 of the bracket 53. The other adhesive layer is adhered to the inner face 651 of the support 65.

It should be noted that the adhesive portion 54 may be implemented by adhesive agent applied when the cleaning device 50 is attached to the support 65.

As illustrated in FIG. 16, the support 65 has an opening 652. The opening 652 is formed so as to be adjacent to the translucent cover 71 of the lighting device 70. As the cleaning device 50 is attached to the support 65, the nozzle 51 is disposed so that the cleaning liquid W is jetted to the translucent cover 71 through the opening 652. In addition, the nozzle 51 is disposed so that at least a portion thereof is covered by the support 65 when viewed from a side corresponding to an outer face 653 of the support 65.

More specifically, the opening 652 is formed such that an inner edge 652a faces the translucent cover 71. In other words, there is no object that blocks the cleaning liquid W between the inner edge 652a and the translucent cover 71.

In the configuration according to the present embodiment, the bracket 53 and the inner face 651 are adhered by the adhesive portion 54 with a simple operation of pressing the bracket 53 against the support 65 from the side corresponding to the inner face 651 of the support 65, so that the cleaning device 50 can be attached to the support 65. Since the work from the side corresponding to the outer face 653 of the support 65 can be eliminated, it is possible to simplify the production equipment and improve the productivity.

In addition, since the translucent cover 71 of the lighting device 70 and the nozzle 51 can be directly faced each other through the opening 652 of the support 65, the flexibility as for the locational relationship therebetween can be increased.

In addition, it is possible to make difficult to view the bracket 43 from the side corresponding to the outer face 633 of the support 65. Coupled with the appearance that at least a portion of the nozzle 51 is covered by the support 65 itself when viewed from the side corresponding to the outer face 653 of the support 65, the visibility of the cleaning device 50 can be reduced.

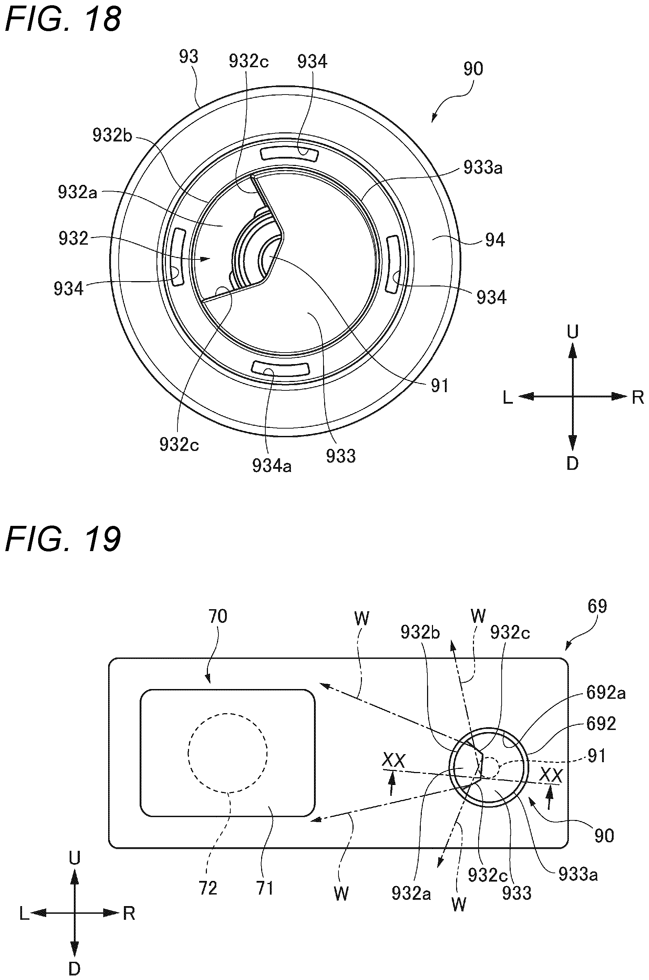

FIG. 18 illustrates an appearance of a cleaning device 90 according to a sixth embodiment as viewed from the front side. As illustrated in FIG. 19, the cleaning device 90 is a device adapted to be attached to a support 69 to clean the lighting device 70. The support 69 may be a component constituting a part of the vehicle 80 illustrated in FIG. 3.

As illustrated in FIG. 19, the cleaning device 90 includes a nozzle 91. The cleaning device 90 is configured to perform cleaning by jetting cleaning liquid W from the nozzle 91 toward the translucent cover 71.

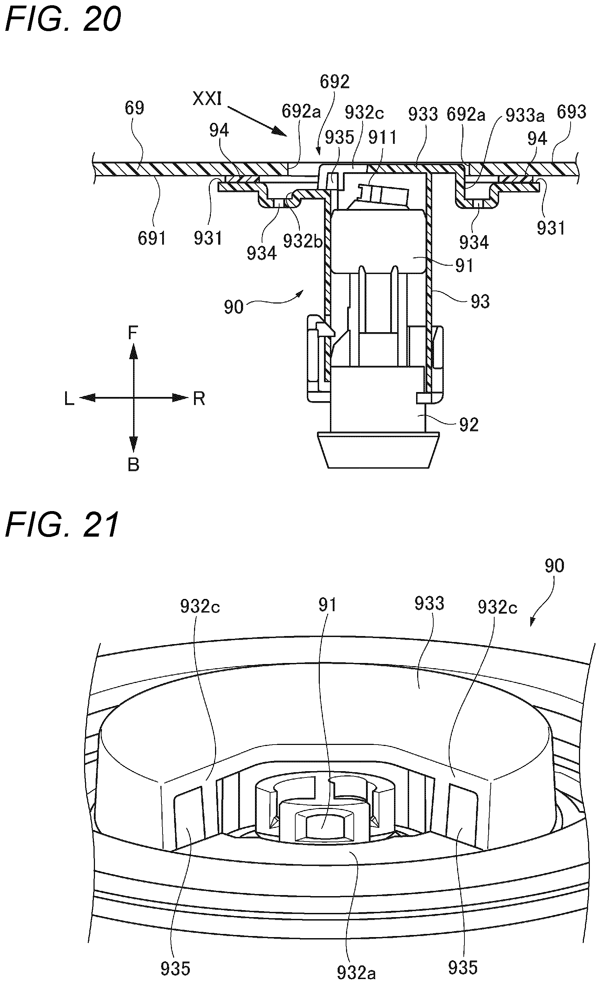

FIG. 20 illustrates a cross section along the line XX-XX in FIG. 19 and viewed from the arrowed direction. The cleaning device 90 includes a joint 92. One end of a supply pipe (not illustrated) of the cleaning liquid W is connected to the joint 92. The joint 92 includes a channel adapted to be communicated with the supply pipe.

On the other hand, the nozzle 91 includes an outlet 911 and a channel. The channel communicates with the outlet 911. As the nozzle 91 is connected to the joint 92, the channels communicate with each other. As a result, a channel for the cleaning liquid W extending from the supply pipe to the outlet 911 is formed. The cleaning liquid W is jetted from the outlet 911.

The cleaning device 90 includes a bracket 93. The bracket 93 is configured to hold the nozzle 91 in place. In other words, the position of the nozzle 91 in the cleaning device 90 is unchanged, and is distinguished from a cleaning device with a so-called pop-up nozzle.

As illustrated in FIG. 18, the cleaning device 90 includes an adhesive portion 94. As illustrated in FIG. 20, the adhesive portion 94 adheres the bracket 93 to an inner face 691 of the support 69. In other words, the cleaning device 90 is attached to the support 69 from the side corresponding to the inner face 691.

In this example, the adhesive portion 94 is implemented by a tape member having an adhesive layer on both faces thereof. One adhesive layer in the tape member is adhered to a supported face 931 of the bracket 93. The other adhesive layer is adhered to the inner face 691 of the support 69.

It should be noted that the adhesive portion 94 may be implemented by adhesive agent applied when the cleaning device 90 is attached to the support 69.

As illustrated in FIG. 18, the bracket 93 includes a guide 932 and a cover 933. On the other hand, as illustrated in FIGS. 19 and 20, an opening 692 is formed in the support 69. As the cleaning device 90 is attached to the support 69, the guide 932 and the cover 933 are exposed on the side corresponding to an outer face 693 of the support 69 through the opening 692.

As illustrated in FIGS. 18 and 19, the guide 932 has a recessed face 932a. The recessed face 932a has a dimension and a shape capable of guiding the cleaning liquid W jetted from the nozzle 91 to the translucent cover 71.

The cover 933 is formed so as to cover at least a portion of the nozzle 91 when viewed from a side corresponding to the outer face 693 of the support 69.

As illustrated in FIGS. 19 and 20, an outer edge 932b of the guide 932 and an outer edge 933a of the cover 933 are located inside an inner edge 692a of the opening 692. Accordingly, the bracket 93 and the inner face 691 are adhered to by the adhesive portion 94 with a simple operation of causing the guide 932 and the cover 933 to pass through the opening 692 from the side corresponding to the inner face 691 of the support 69, so that the cleaning device 90 can be attached to the support 69. Since it is possible to eliminate the need for work from the side corresponding to the outer face 693 of the support 69, it is possible to simplify the production equipment and improve the productivity.

In addition, it is possible to reduce the dimension of a portion of the bracket 93 exposed on the side corresponding to the outer face 693 of the support 69 through the opening 692. Coupled with the appearance that at least a portion of the nozzle 91 is covered by the cover 933 when viewed from the side corresponding to the outer face 693, the visibility of the cleaning device 90 can be reduced.

As illustrated in FIGS. 18 and 20, the bracket 93 is formed with multiple apertures 934. Each aperture 934 is a through hole having a dimension that allows passage of the cleaning liquid W. Each aperture 934 communicates a side of the bracket 93 facing an outer side of the support 69 and a side of the bracket 93 facing an inner side of the support 69.

Each aperture 934 is disposed so as to be covered by the support 69 when the cleaning device 90 is attached to the support 69. An aperture 934a, that is one of the multiple apertures 934, is disposed such that at least a portion thereof is located vertically under the nozzle 91.

A portion of the cleaning liquid W jetted toward the translucent cover 71 of the lighting device 70 may descend along the outer face 693 of the support 69 and enter the opening 692. Such cleaning liquid as returned may include dust and mud peeled from the translucent cover 71 by the cleaning. Since the apertures 934 as described above are formed in the bracket 93, it is possible to promote drain of the cleaning liquid that has returned and entered the opening 692. As a result, it is possible to suppress occurrence of a situation that the jetting of the cleaning liquid W from the nozzle 91 is obstructed by dust and/or mud that have entered the opening 692 together with the returned cleaning liquid and fixed to the guide 932 while being dried.

In addition, since each aperture 934 is disposed so as to be covered by the support 69, it is possible to reduce the visibility from the side corresponding to the outer face 693 of the support 69. Accordingly, it is possible to suppress the influence of the configuration for draining the cleaning liquid that has returned and entered the opening 692 on the appearance of the cleaning device 90.

In this example, four apertures 934 are formed. However, the number of the apertures 934 can be appropriately determined as long as at least one aperture 934 is located vertically under the nozzle 91 (in other words, at a location where the drain efficiency is the highest).

As illustrated in FIGS. 18 and 19, the guide 932 may include a deflector 932c. The deflector 932c is formed as a wall capable of deflecting the traveling direction of the cleaning liquid W jetted from the nozzle 91 toward the translucent cover 71.

An arrow indicated by a chain line in FIG. 19 represents a path of the cleaning liquid W assumed when the deflector 932c is not present. It is conceivable that the cleaning liquid W that is not deflected by the deflector 932c is consumed without contributing to the cleaning of the translucent cover 71. By providing the deflector 932c as in this example, it is possible to improve the utilization efficiency of the cleaning liquid W.

FIG. 21 illustrates the appearance of the cleaning device 90 as viewed from the direction along the arrow XXI in FIG. 20. The deflector 932c is formed with multiple apertures 935. Each aperture 935 faces the recessed face 932a of the guide 932. Each aperture 935 is a through hole having a dimension that allows passage of the cleaning liquid W. Each aperture 935 communicates a side of the bracket 93 facing an outer side of the support 69 and a side of the bracket 93 facing an inner side of the support 69.

According to such a configuration, it is possible to further promote the drain of the cleaning liquid that has returned and entered the opening 692. In addition, since each aperture 935 is formed at a position where is difficult to be visually recognized in the front view of the cleaning device 90, it is possible to suppress the configuration for draining the returned cleaning liquid on the appearance of the cleaning device 90.

In this example, two apertures 935 are formed. However, the number of the apertures 935 may be appropriately determined. In a case where only one aperture 935 is formed, it is preferable that the opening is disposed below the nozzle 91 at a position facing the recessed face 932a. In a case where the aperture 935 is formed, the aperture 934 described above may be omitted.

The above embodiments are merely illustrative to facilitate understanding of the presently disclosed subject matter. The configuration according to each of the above embodiments can be appropriately changed or combined with other embodiments without departing from the scope of the presently disclosed subject matter.

For example, at least one of the aperture 934 and the aperture 935 of the cleaning device 90 according to the sixth embodiment may be formed in each of the bracket 13 of the cleaning device 10 according to the first embodiment, the bracket 23 of the cleaning device 20 according to the second embodiment, and the bracket 33 of the cleaning device 30 according to the third embodiment.

The target to be cleaned by the cleaning device according to each embodiment is not limited to the translucent cover 71 of the lighting device 70. Examples of other targets include a sensing face of a sensor that senses information around the vehicle 80 with light, or a surface of a member through which such light passes.

For cleaning the target, liquid such as water or gas such as air may be used. The liquid or gas is an example of the fluid.

The cleaning device according to each embodiment may be installed in a mobility other than the vehicle. Examples of other mobilities include an aircraft, a flying object, a ship, and the like. The mobility may not require a driver.

The cleaning device according to each embodiment does not have to be installed in a mobility. For example, the cleaning device according to each embodiment may be installed in a house, a facility, a transportation infrastructure, or the like and used for cleaning the target as exemplified above.

The present application is based on Japanese Patent Application No. 2022-086820 filed on May 27, 2022, and Japanese Patent Application No. 2022-142167 filed on September 7, 2022, the entire contents of which are incorporated herein by reference.

## Claims

1. A cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the bracket includes:
a guide having a recessed face that is configured to guide the fluid toward the target; and
a cover at least partially covering the nozzle as viewed from a side corresponding to an outer face of the support; and
wherein an outer edge of the guide and an outer edge of the cover are configured to be located inside an inner edge of the opening when the cleaning device is attached to the support.

2. A cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the bracket includes a guide having a recessed face that is configured to guide the fluid toward the target;
wherein the nozzle is disposed so as to be at least partially covered by the support when the cleaning device is attached to the support; and
wherein an outer edge of the guide is configured to be located inside an inner edge of the opening when the cleaning device is attached to the support.

3. The cleaning device according to claim 1 or 2, further comprising:
a deflector configured to deflect the fluid toward the target.

4. The cleaning device according to any one of claims 1 to 3,
wherein the bracket is formed with an aperture that allows at least the fluid to pass through; and
wherein the opening is disposed so as to be covered by the support at least at a position where is vertically under the nozzle when the cleaning device is attached to the support.

5. The cleaning device according to any one of claims 1 to 4,
wherein the bracket is formed with an aperture that allows at least the fluid to pass through; and
wherein the opening is disposed so as to face the guide.

6. A cleaning device adapted to be attached to a support having a recessed face, the cleaning device comprising:
a nozzle configured to jet fluid toward a target;
a bracket holding the nozzle in place; and
an adhesive portion adhering the bracket to an inner face of the support,
wherein the bracket includes an opening configured to receive the recessed face at a side corresponding to the inner face of the support;
wherein the nozzle is disposed such that the fluid is guided toward the target by the recessed face when the cleaning device is attached to the support; and
wherein the nozzle is disposed so as to be at least partially covered by the support as viewed from a side corresponding to an outer face of the support when the cleaning device is attached to the support.

7. The cleaning device according to claim 6,
wherein the bracket is formed with an aperture that allows at least the fluid to pass through; and
wherein the opening is disposed so as to be covered by the support at least at a position where is vertically under the nozzle when the cleaning device is attached to the support.

8. The device according to any one of claim 6 or 7,
wherein the bracket is formed with an aperture that allows at least the fluid to pass through; and
wherein the opening is disposed so as to face the guide.

9. A cleaning device adapted to be attached to a support having a recessed face, the cleaning device comprising:
a nozzle configured to jet fluid toward a target; and
an engaging portion configured to engage with the support at a side corresponding to an inner face of the support to hold the nozzle in place,
wherein the nozzle is disposed such that the fluid is guided toward the target by the recessed face when the cleaning device is attached to the support; and
wherein the nozzle is disposed so as to be at least partially covered by the support as viewed from a side corresponding to an outer face of the support when the cleaning device is attached to the support.

10. The cleaning device according to claim 9,
wherein the nozzle is disposed such that the fluid is deflected toward the target by a part of the recessed face when the cleaning device is attached to the support.

11. A cleaning device adapted to be attached to a support having an opening, the cleaning device comprising:
a nozzle configured to jet fluid toward a target;
a bracket holding the nozzle in place; and
an adhesive portion adhering the bracket to an inner face of the support,
wherein the nozzle is disposed such that the fluid that has passed the opening is jetted toward the target when the cleaning device is attached to the support; and
wherein the nozzle is disposed so as to be at least partially covered by the support as viewed from a side corresponding to an outer face of the support when the cleaning device is attached to the support.

12. The cleaning device according to any one of claims 1 to 11,
wherein the support is a part of a mobility.

13. The cleaning device according to any one of claims 1 to 11,
wherein the target is a part of a lighting device.
